# EUROPÄISCHE PATENTSCHRIFT

(11) **EP 2 578 401 B1**
(45) Veröffentlichungstag und Bekanntmachung des Hinweises auf die Patenterteilung: **04.06.2014**
(21) Anmeldenummer: 11184094.8
(22) Anmeldetag: 06.10.2011
(51) Int. Cl.: B32B 38/04, B32B 38/00, H02G 3/04

(54) **Verfahren zur Herstellung eines, insbesondere zur Längsummantelung von langgestrecktem Gut verwendbaren Klebebandes sowie Vorrichtung zur Durchführung des Verfahrens**
Method for producing an adhesive tape, in particular an adhesive tape used for longitudinal sheathing of stretched goods and device for performing the method
Procédé de fabrication d'une bande adhésive utilisable notamment pour le gainage longitudinal de produits allongés et dispositif destiné à l'exécution du procédé

(43) Veröffentlichungstag der Anmeldung: 10.04.2013
(73) Patentinhaber: Coroplast Fritz Müller GmbH & Co. KG, 42279 Wuppertal (DE)
(72) Erfinder: Frigge, Christoph, 45549 Sprockhövel (DE); Becker, Klaus, 45549 Sprockhövel (DE)
(74) Vertreter: Patentanwälte Dr. Solf & Zapf

(56) Entgegenhaltungen:
- EP-A1- 2 047 985
- WO-A1-2006/016393
- WO-A1-2010/039949

## Beschreibung

Die Erfindung betrifft ein Verfahren zur Herstellung zumindest eines, insbesondere zur Längsummantelung von langgestrecktem Gut verwendbaren Klebebandes, mit zwei Bandlagen, die jeweils aus einem Trägermaterial bestehen, das zumindest in einer der Bandlagen einseitig, vollflächig oder partiell, beispielsweise streifenförmig, mit einer Klebebeschichtung beschichtet ist, wobei das Trägermaterial von einer Zuführungsrolle abgerollt wird, wobei die eine Bandlage mit ihrer Klebebeschichtung mit einem auf zumindest einer ihrer Längsseiten ausgebildeten seitlichen Überstand gegen die andere Bandlage laminiert wird und das aus den laminierten Bandlagen gebildete Klebeband auf einer Wickelrolle aufgerollt wird.

Des Weiteren betrifft die Erfindung eine Vorrichtung zur Durchführung eines derartigen Verfahrens, mit mindestens einer Wickelrolle für das Klebeband und mit mindestens einer drehbar gelagerten Zuführungsrolle für jede der zu laminierenden Bandlagen zu der Wickelrolle.

Im Automobilbereich werden Kabelsätze oftmals mit Klebebändern umwickelt, wobei vor allem textile Klebebänder neben der reinen Bündelungsfunktion mittlerweile zahlreiche Zusatzfunktionen, wie den Schutz der Leitungen vor Abrieb oder die Dämpfung von Klapper- oder Vibrationsgeräuschen, übernommen haben. Weit verbreitet ist dabei der Einsatz sowohl von Gewebeklebebändern, als auch von verschiedenartigen Vliesklebebändern, Folienklebebändern und Schaumstoffklebebändern. Für die weithin übliche schraubenförmigen Bewicklung von langgestrecktem Gut, wie beispielsweise von Kabelsätzen, werden alternativ zu den normalerweise eingesetzten einseitig vollflächig klebenden Bändern auch Bänder angeboten, bei denen nach dem Umhüllen des Gutes eine innen weitgehend klebfreie Umhüllung entsteht. Insbesondere durch den Einsatz von Bändern mit doppellagigem Aufbau, die gemäß einem Verfahren der eingangs beschriebenen Art herstellbar sind, wonach zwei Bandlagen mit seitlichem Überstand gegeneinander laminiert werden, kann einerseits ein erheblich höherer Abriebschutz und ein größerer Polstereffekt erreicht werden als bei einlagigen Ummantelungen. Andererseits bieten diese Bänder, die u. a. in der DE 20 52 271 A1 und in einer Weiterentwicklung in der EP 1 315 781 B1 beschrieben sind, den Vorteil einer erheblich höheren Flexibilität.

Auf die Herstellung dieser Klebebänder wird in den genannten Dokumenten nicht näher eingegangen. Die EP 1 315 781 B1 spricht lediglich allgemein davon, dass die Klebebänder derartig aufeinander laminiert werden, dass die Klebemasse des ersten Trägermaterials mit der Klebemasse des zweiten Trägermaterials verklebt. Aus der betrieblichen Praxis ist jedoch eine Herstellung bekannt, wonach, um die maschinelle Verarbeitbarkeit der Klebebandlagen zu gewährleisten, zunächst aus Vorratsrollen, auf denen das Klebeband mit großer Breite aufgewickelt ist - sogenannten Breitrollen -, Einsatzrollen mit der erforderlichen Klebebandbreite hergestellt werden, die dann in einem weiteren Arbeitsgang mit seitlichem Versatz gegeneinander laminiert werden. Da diese Einsatzrollen zunächst vorgefertigt, insbesondere vorgeschnitten, werden müssen, ist das Verfahren relativ zeit- und kostenintensiv.

Der Erfindung liegt die Aufgabe zugrunde, ein Verfahren der eingangs genannten Art und eine Vorrichtung zu seiner Durchführung zu schaffen, womit Klebebänder herstellbar sind, bei denen eine erste Bandlage mit ihrer Klebebeschichtung mit einem seitlichen Überstand gegen die Klebebeschichtung einer zweiten Bandlage laminierbar ist, wobei bei Gewährleistung eines materialökonomisch günstigen Einsatzes und einer leichten maschinellen Verarbeitbarkeit der Klebebandlagen ein verringerter Herstellungsaufwand für das Klebeband erzielt werden soll.

Im Hinblick auf das Verfahren wird dies erfindungsgemäß dadurch erreicht, dass das Trägermaterial zur Bildung mindestens einer der Bandlagen von einer Zuführungsrolle abgerollt wird, die als Breitrolle ausgebildet ist, auf der das Trägermaterial eine größere Breite aufweist als seine für das Laminieren erforderliche Breite, und dass das Trägermaterial vor dem Laminieren in mindestens zwei in Bandlängsrichtung verlaufende Streifen geschnitten wird, welche die für das Laminieren erforderliche Breite aufweisen, wobei die Streifen vereinzelt und derart laminiert werden, dass jeder Streifen in mindestens einem Klebeband jeweils mindestens eine Bandlage bildet.

Durch die Erfindung kann auf diese Weise ein Klebeband hergestellt werden, das einerseits eine weitgehend klebfreie Innenseite aufweist, und damit vorteilhafterweise die Möglichkeit der Herstellung hoch flexibler Umhüllungen für langgestrecktes Gut, wie Kabelsätze, bietet, dessen Herstellung aber anderseits insofern vereinfacht ist, als dazu keine vorgeschnittenen Einsatzrollen erforderlich sind. Insbesondere durch die parallel ablaufende Fertigung von mindestens zwei, entsprechend der möglichen Breite der Breitrolle auch einer Vielzahl von Klebebändern gleichzeitig, vervielfacht sich dabei die Produktivität der Herstellung. Hierdurch tritt eine erhebliche Zeit- und damit Kostenersparnis gegenüber dem bekannten Verfahren ein.

Des Weiteren ist auch von Vorteil, dass die separaten, insbesondere mit gleicher Drehzahl laufenden Wickelrollen, auf denen die erfindungsgemäß hergestellten Klebebänder aufgerollt werden, auf einer gemeinsamen Welle bzw. vorzugsweise zur Vereinzelung der Streifen alternierend auf zwei gemeinsamen Wellen angeordnet werden können, für die nur ein einziger Antrieb erforderlich ist.

Im Hinblick auf die Vorrichtung wird die der Erfindung zugrunde liegende Aufgabe dadurch gelöst, dass zumindest eine Zuführungsrolle als Breitrolle ausgebildet ist, auf der das mit der Klebebeschichtung versehene Trägermaterial eine größere Breite aufweist als seine für das Laminieren erforderliche Breite, wobei zwischen der Breitrolle und der Wickelrolle mindestens eine Schneideinrichtung zum Schneiden des mit der Klebebeschichtung versehenen Trägermaterials in in Bandlängsrichtung verlaufende Streifen angeordnet ist.

Im Hinblick auf eine optimale Auswahl der Schneideinrichtung kommen z. B. der Quetschschnitt, bei dem ein Kreismesser gegen ein Walze arbeitet, der Scherenschnitt, bei dem ein Kreismesser in ein Untermesser eintaucht, der Klingenschnitt, bei dem eine fest stehende Klinge in das durchlaufende Gut eintaucht, oder der Berstschnitt, bei dem ein angetriebenes Kreismesser gegen eine frei geführte Bahn arbeitet, zum Einsatz. Die Messer können gegebenenfalls auch gekühlt oder beheizt werden. Andere Schneidverfahren, wie der Laserschnitt oder das Schneiden mit Wasserstrahlen, sind denkbar. Welches Schneidverfahren eingesetzt wird, hängt vom Material der Klebebänder ab.

Weitere vorteilhafte Ausgestaltungsmerkmale der Erfindung sind in den Unteransprüchen sowie der folgenden Beschreibung enthalten.

Anhand mehrerer durch die beiliegende Zeichnung veranschaulichter erfindungsgemäßer Ausführungsbeispiele wird die Erfindung näher erläutert.

Dabei zeigen:
- Fig. 1: in perspektivischer Darstellung, eine erste Ausführungsform einer erfindungsgemäßen Vorrichtung zur Durchführung einer ersten Ausführungsform eines erfindungsgemäßen Verfahrens,
- Fig. 2: in einer Fig. 1 entsprechenden Darstellung, eine zweite Ausführungsform einer erfindungsgemäßen Vorrichtung zur Durchführung einer zweiten Ausführungsform eines erfindungsgemäßen Verfahrens,
- Fig. 3: in einer Fig. 1 und 2 entsprechenden Darstellung, eine dritte Ausführungsform einer erfindungsgemäßen Vorrichtung zur Durchführung einer dritten Ausführungsform eines erfindungsgemäßen Verfahrens,
- Fig. 4: in einer vergrößerten Darstellung gegenüber Fig. 1 bis 3, eine Wickelrolle einer erfindungsgemäßen Vorrichtung zur Durchführung des erfindungsgemäßen Verfahrens,
- Fig. 5 und 6: im Querschnitt, zwei Ausführungsformen von Klebebändern zur Längsummantelung von langgestrecktem Gut.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

In den Figuren der Zeichnung sind gleiche bzw. funktionsgleiche Teile stets auch mit den gleichen Bezugszeichen versehen, so dass sie in der Regel auch jeweils nur einmal beschrieben werden.

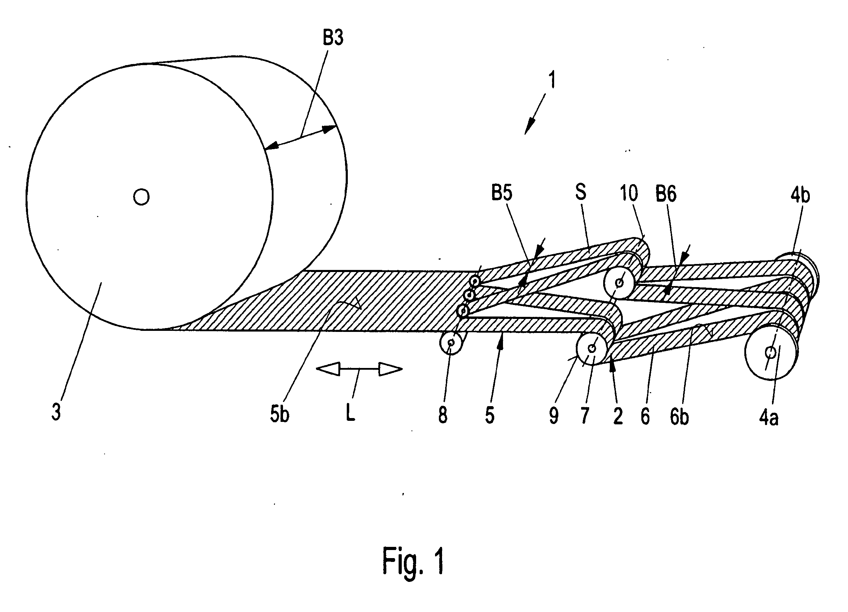

Wie zunächst Fig. 1 veranschaulicht, umfasst die erste Ausführung einer erfindungsgemäßen Vorrichtung 1 zur Durchführung eines erfindungsgemäßen Verfahrens, das insbesondere der Herstellung eines Klebebandes 2 zur Längsummantelung von langgestrecktem Gut dient, mindestens drei - dargestellt sind genau drei - drehbar gelagerte Zuführungsrollen 3, 4a, 4b. Von der ersten Zuführungsrolle 3 wird zur Bildung des Klebebandes 2 jeweils eine erste Bandlage 5 und von der zweiten Zuführungsrolle 4a sowie der dritten Zuführungsrolle 4b jeweils eine zweite Bandlage 6 bereitgestellt.

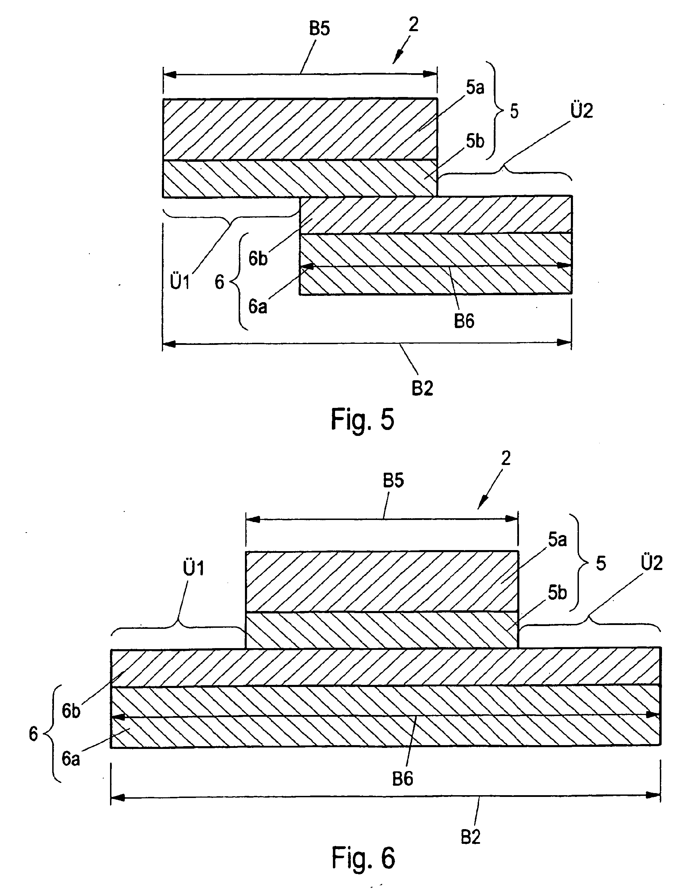

Jede der beiden Bandlagen 5, 6 des Klebebandes 2, welches exemplarisch in zwei Ausführungen in Fig. 5 und 6 dargestellt ist, besteht jeweils aus einem bandförmigen Trägermaterial 5a, 6a, das zumindest jeweils einseitig mit einer insbesondere aus einem Haftklebstoff gebildeten, selbstklebenden Klebebeschichtung 5b, 6b beschichtet ist. Diesen Aufbau der Bandlagen 5, 6 veranschaulichen nur Fig. 5 und 6.

Es ist dabei möglich, dass auch nur eine der Bandlagen 5, 6 jeweils mit der selbstklebenden Klebebeschichtung 5b, 6b versehen ist und die jeweils andere der Bandlagen 5, 6 unbeschichtet bleibt. Die Klebebeschichtung 5b, 6b kann jeweils vollflächig oder partiell, beispielsweise streifenförmig, aufgetragen sein. So können bevorzugt in Bandlängsrichtung L parallel zueinander verlaufende Beschichtungsstreifen vorgesehen sein.

Des Weiteren umfasst die erfindungsgemäße Vorrichtung 1 mindestens zwei Wickelrollen 7, denen die Bandlagen 5, 6 zugeführt und auf denen sie zu dem Klebeband 2 laminiert werden. Dieser Vorgang wird durch Fig. 6 veranschaulicht und ist allen Ausführungsvarianten der Erfindung gemeinsam. Die Zuführungsrollen 3, 4a, 4b und die Wickelrollen 7 sind achsparallel zueinander angeordnet.

Die so hergestellten laminierten Klebebänder 2 haben üblicherweise Breiten B2 im Bereich von 25 mm bis 100 mm und Längen im Bereich von 5 m bis 100 m. Die Ausgangsrollen, aus denen die einzelnen Klebebandlagen 5, 6 geschnitten werden, haben üblicherweise Breiten im Bereich von 500 mm bis 2000 mm und Längen im Bereich von 500 m bis 5000 m. Insbesondere die Rollenlängen sind stark materialabhängig. Da die Rollendurchmesser häufig technischen Begrenzungen unterliegen, können bei dünnen Trägermaterialien längere Rollen gefertigt werden als bei dicken Materialien.

Erfindungsgemäß ist bei der ersten Ausführung vorgesehen, dass die erste Zuführungsrolle 3 aus einer derartigen Ausgangsrolle gebildet ist, d. h. als eine sogenannte Breitrolle, auf welcher das mit der Beschichtung 5b versehene Trägermaterial 5a eine größere Breite B3 aufweist, als sie für das Laminieren erforderlich ist. Diese erforderliche Breite ist in der Zeichnung jeweils mit dem Bezugszeichen B5 für die erste Bandlage 5 und mit dem Bezugszeichen B6 für die zweite Bandlage 6 bezeichnet.

Auf der zweiten Zuführungsrolle 4a und der dritten Zuführungsrolle 4b besitzt in der ersten Ausführung der Erfindung das mit der Beschichtung 6b versehene Trägermaterial 6a bereits die für das Laminieren erforderliche Breite B6. Es handelt sich damit bei diesen Zuführungsrollen 4a, 4b um herkömmliche Einsatzrollen, wie sie eingangs beschrieben wurden und die zunächst vorgefertigt werden müssen. Die Breite B6 der Rollen 4a, 4b kann dabei jeweils etwa in demselben Bereich liegen wie die Breite B2 des fertigen Klebebandes 2, vorzugsweise im Bereich von 25 mm bis 100 mm, wobei sich auch die Länge, die im Bereich von 5 m bis 100 m liegen kann, und damit der Durchmesser der Rolle von der der Breitrolle unterscheidet.

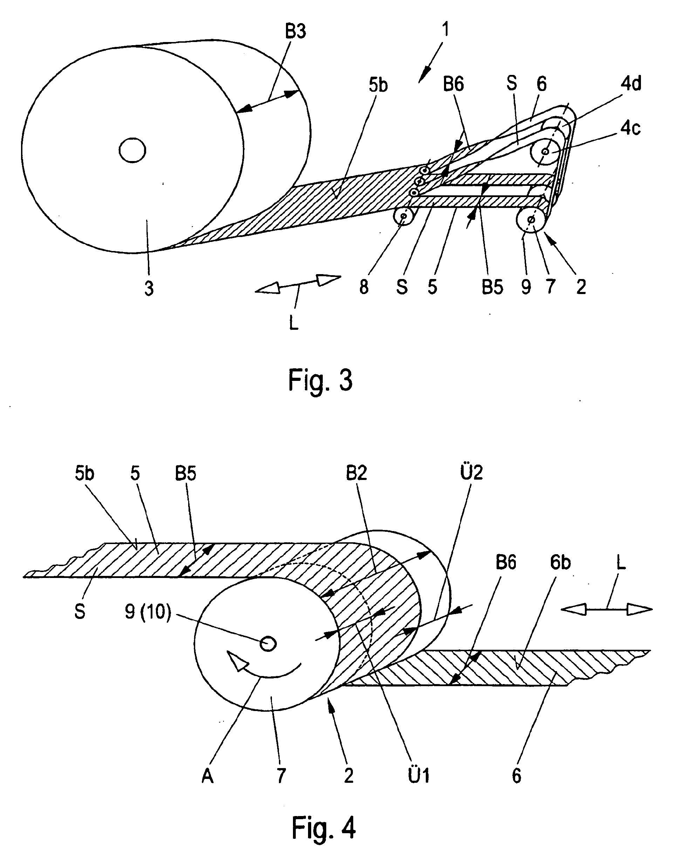

Wie insbesondere Fig. 4 verdeutlicht, wird die erste Bandlage 5 mit ihrer Klebebeschichtung 5b mit einem auf zumindest einer ihrer Längsseiten ausgebildeten seitlichen Überstand gegen die Klebebeschichtung 6b der zweiten Bandlage 6 laminiert, wenn aus den laminierten Bandlagen 5, 6 das Klebeband 2 gebildet und auf der Wickelrolle 7 aufgerollt wird. In den in Fig. 4 bis 6 dargestellten Ausführungsformen des Klebebandes 2 sind dabei auf beiden Längsseiten seitliche Überstände ausgebildet, die mit den Bezugszeichen Ü1 und Ü2 bezeichnet sind. An diesen Stellen kann das Klebeband 2 später bei einer Montage verklebt werden, während es im dazwischen liegenden, nicht näher bezeichneten, Bereich klebstofffrei ist. Der jeweilige Überstand (Ü1, Ü2 oder Ü1 + Ü2), um den das Klebeband 2 breiter ist als zumindest eine der Bandlagen 5, 6, kann bevorzugt mindestens 5,0 mm betragen.

Des Weiteren ist erfindungsgemäß vorgesehen, dass zwischen der Breitrolle und den Wickelrollen 7 mindestens eine Schneideinrichtung 8 zum Zerteilen des mit der Klebebeschichtung 5b versehenen Trägermaterials 5a in Streifen S, die in Bandlängsrichtung L verlaufen, angeordnet ist. Das Schneiden kann dabei je nach dem Material und der Dicke der Bandlage 5 im Quetschschnitt, im Scherenschnitt, im Klingenschnitt, unter Einsatz eines Lasers oder mit einem Wasserstrahl erfolgen. Beim Quetschschnitt ist die Schneideinrichtung 8 eine solche, bei der ein Kreismesser gegen eine Walze arbeitet. Beim Scherenschnitt taucht ein Kreismesser in ein Untermesser ein; und beim Klingenschnitt taucht eine fest stehende Klinge zumindest jeweils einseitig in das durchlaufende, mit der Klebebeschichtung 5b versehene Trägermaterial 5a ein.

In dem erfindungsgemäßen Verfahren entsprechend der ersten Ausführung wird also zur Bildung der ersten Bandlage 5 das mit der Klebebeschichtung 5b versehene Trägermaterial 5a mit der großen Breite B3 von der Breitrolle abgerollt und unmittelbar vor dem Laminieren in die zwei, die erste Bandlage 5 bildenden, in Bandlängsrichtung L verlaufenden Streifen S geschnitten, die jeweils die zum Laminieren erforderliche Breite B5 aufweisen. Die Streifen S werden vereinzelt, d. h. auf Abstand zueinander gebracht, und gleichzeitig gegen die zweite Bandlage 6 zu zwei Klebebändern 2 laminiert, welche auf den separaten Wickelrollen 7 aufgerollt werden.

Die Streifen S können insbesondere mit Vorteil dadurch vereinzelt werden, indem die separaten Wickelrollen 7 altemiernd auf unterschiedlichen Wellen 9, 10 angeordnet sind, wobei die Wickelrollen 7 durch die ihnen zugeordneten Wellen gleichsinnig angetrieben werden (Pfeil A in Fig. 4). Auf jeder Welle 9, 10 sind dabei mindestens zwei Wickelrollen 7, vorzugsweise eine Vielzahl von Wickelrollen 7 angeordnet, wobei die Wellen 9, 10, insbesondere mit gleicher Drehzahl, mit Vorteil durch einen einzigen, beispielsweise elektromotorischen, Antrieb angetrieben werden können.

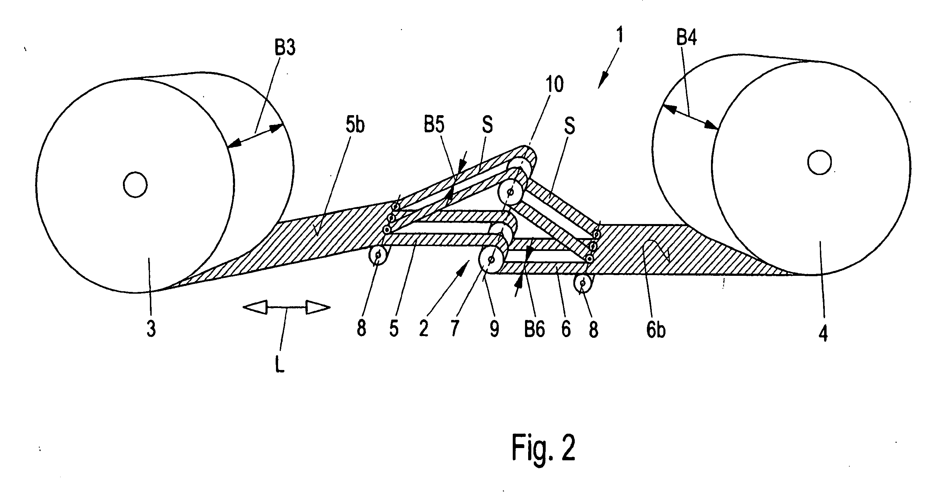

Bei der in Fig. 2 dargestellten zweiten Ausführungsform einer erfindungsgemäßen Vorrichtung 1 zur Durchführung einer zweiten Ausführungsform eines erfindungsgemäßen Verfahrens ist vorgesehen, dass zur Bildung der zweiten Bandlage 6 das mit der Klebebeschichtung 6b versehene Trägermaterial 6a von einer Zuführungsrolle 4 abgerollt wird, die ebenfalls als Breitrolle ausgebildet ist, auf welcher das mit der Klebebeschichtung 6b versehene Trägermaterial 6a eine größere Breite B4 aufweist als die für das Laminieren erforderliche Breite B6. Das mit der Klebebeschichtung 6b versehene Trägermaterial 6a wird unmittelbar vor dem Laminieren in mindestens zwei, jeweils die zweite Bandlage 6 bildende Streifen S mit der erforderlichen Breite B6 geschnitten; die Streifen S werden vereinzelt und gleichzeitig auf die Streifen S der ersten Bandlage 5 laminiert. Zwischen jeder der Breitrollen, die die Zuführungsrollen 3, 4 bilden, und den Wickelrollen 7 ist also mindestens eine Schneideinrichtung 8 angeordnet.

Die in Fig. 3 dargestellte dritte Ausführungsform einer erfindungsgemäßen Vorrichtung 1 zur Durchführung einer dritten Ausführungsform eines erfindungsgemäßen Verfahrens unterscheidet sich von der zweiten exemplarisch dargestellten Ausführungsform der Erfindung dadurch, dass das mit der Klebebeschichtung 5b versehene Trägermaterial 5 sowohl zur Bildung der ersten Bandlage 5, als auch zur Bildung der zweiten Bandlage 6 dient. Er wird dazu von einer gemeinsamen, die erste Zuführungsrolle 3 bildenden Breitrolle abgerollt und in jeweils vier, paarweise die erste Bandlage 5 und die zweite Bandlage 6 bildende Streifen S mit der zum Laminieren erforderliche Breite B5, B6 geschnitten. Hierzu sind - wie dargestellt - mindestens drei Schneideinrichtungen 8 - beispielsweise drei Messer in einer gemeinsamen Schneidvorrichtung - erforderlich. Eine Minimalvariante ist das Zerschneiden des mit der Klebebeschichtung 5b versehenen Trägermaterials 5 in jeweils zwei, paarweise die erste Bandlage 5 und die zweite Bandlage 6 bildende Streifen S, wobei hierzu mindestens eine Schneideinrichtung 8 - beispielsweise ein Messer in einer Schneidvorrichtung - eingesetzt werden muss.

Alle Streifen S werden vereinzelt, und die Streifen S zur Bildung der zweiten Bandlage 6 werden um 180E gedreht und wiederum wie bei der ersten und zweiten Ausführung der Erfindung gleichzeitig auf die Streifen S zur Bildung der ersten Bandlage 5 laminiert. Dabei werden der erste und der zweite Streifen S gegeneinander laminiert, der dritte Streifen S gegen den vierten und - falls vorhanden - der fünfte gegen den sechsten usw.

An den Umlenkrollen 4c, 4d, auf die jeder zweite Streifen S nach dem Durchlaufen der Schneideinrichtungen 8 geführt wird, werden die zweiten Bandlagen 6 - nach der dort stattfindenden 180E-Drehung - zu den Wickelrollen 7 geführt. Die Führung jedes zweiten Streifens S zu den Umlenkrollen 4c, 4d bewirkt dabei auch die Vereinzelung der Streifen S. Die Wickelrollen 7 können hier - wie dargestellt - auf mindestens nur einer Welle 9 angeordnet sein.

Einen bevorzugten Anwendungsfall von erfindungsgemäß hergestellten Klebebändern 2, wie sie beispielhaft in Fig. 5 und 6 gezeigt sind, stellt das schraubenförmige Umwickeln von Kabelsätzen dar, wobei aus mehreren, jeweils mit einer Isolierung versehenen, insbesondere elektrischen, Leitungen durch ein zumindest teilweises Umwickeln mit dem Klebeband 2 ein Kabelbaum, insbesondere für die Automobilindustrie, gebildet werden kann.

Die Umwicklung kann grundsätzlich aber auch nicht schraubenlinienförmig, sondern in Längsrichtung des zu umhüllenden Gutes erfolgen, wobei eine Längsachse des Klebebandes 2 parallel zur Verlaufsrichtung des langgestreckten Gutes ausgerichtet ist.

Bei dem Klebeband gemäß Fig. 5 ist vorgesehen, dass auf die erste Bandlage 5 eine zweite Bandlage 6 auflaminiert ist, die die gleiche Breite B6 aufweist wie die Breite B5 der ersten Bandlage 5. Beidseitig sind klebende Überstände Ü1, Ü2 vorgesehen, wobei der klebende Überstand Ü1 auf der einen Längsseite des Klebebandes 2 genauso groß ist wie der Überstand Ü2 auf der anderen Längsseite des Klebebandes 2, jedoch die Klebebeschichtungen 5b, 6b in entgegengesetzte Richtungen (in der Figur: einmal nach oben und einmal nach unten) weisen.

Bei dem Klebeband gemäß Fig. 6 ist vorgesehen, dass auf die erste Bandlage 5 eine zweite Bandlage 6 auflaminiert ist, die eine größere Breite B6 aufweist als die Breite B5 der ersten Bandlage 5. Der klebende Überstand Ü1 auf der einen Längsseite des Klebebandes 2 ist genauso groß wie der Überstand auf der anderen Längsseite des Klebebandes 2, wobei aufgrund dieser Laminationsart die Klebebeschichtungen 5b, 6b in die gleiche Richtung (in der Figur: beide nach oben) weisen und das Klebeband 2 dieselbe Breite B2/B6 aufweist wie die zweite Bandlage 6.

Hieraus geht auch hervor, dass, wenn in der vorstehenden Anmeldung von der "erforderlichen Breite" B5, B6 die Rede ist, in die die Streifen S geschnitten werden, es sich grundsätzlich um eine beliebige Breite B5, B6 handeln kann, die sich von Fall zu Fall aus der gewünschten Beschaffenheit des herzustellenden Klebebandes 2 ableitet. Wenn aus dem mit der Klebebeschichtung 5b (bzw. 6b) beschichteten Trägermaterial 5a (bzw. 6a) nur Streifen S gleicher Breite B5 (bzw. B6) geschnitten werden, was jedoch - wie Fig. 6 zeigt - nicht zwingend erforderlich ist, ergibt sich daraus, dass die "größere Breite" B3 (bzw. B4), die das mit der Klebebeschichtung 5b versehene Trägermaterial 5a auf der als Breitrolle ausgebildeten Zuführungsrolle 3 (bzw. 4) haben muss, mindestens doppelt so groß ist, wie die erforderliche Breite B5 (bzw. B6). Bei ungleicher Streifenbreite ergibt sich die Mindestbreite B3 (bzw. B4) auf der Breitrolle als Gesamtsumme der jeweiligen, voneinander verschiedenen Breiten B5 (bzw. B6) aller Streifen S, die erfindungsgemäß geschnitten werden.

Durch den doppellagigen Aufbau des Klebebandes 2 wird ein erheblich höherer Abriebschutz erreicht als bei einlagigen Ummantelungen. Die Dicke der Schutzschicht entspricht bei dem dargestellten Aufbau mit Vorteil der eines mit 50 Prozent Überlappung schraubenförmig gewickelten konventionellen Klebebandes.

Die Erfindung ist nicht auf die in den unabhängigen Ansprüchen definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

Auch ist die Erfindung nicht auf die dargestellten Ausführungsbeispiele beschränkt, sondern der Fachmann kann diese bedarfsweise durch weitere zweckmäßige technische Maßnahmen ergänzen, ohne dass der Rahmen der Erfindung verlassen wird. So kann der Fachmann - wie bereits erwähnt - eine größere Anzahl von Schneideinrichtungen 8, Wickelrollen 7, Zuführungsrollen 4a, 4b und gegebenenfalls Umlenkrollen 4c, 4d vorsehen. Anstelle der dargestellten Umlenkrollen 4c, 4d kann zur 180°-Umlenkung beispielsweise auch ein fester Stab eingesetzt werden, so dass diesbezüglich allgemein von einer Umlenkeinrichtung gesprochen werden kann, für welche in Fig. 3 die Umlenkrollen 4c, 4d exemplarisch stehen.

Für das Klebeband 2 kann vorgesehen sein, dass sowohl das Trägermaterial 5a der ersten Bandlage 5, als auch das Trägermaterial 6b der zweiten Bandlage aus einer Folie oder einem Folienverbundmaterial oder aus einem Gewebe, insbesondere aus einem Polyester- oder Polyamidgewebe, oder aus einem Vlies bestehen. Hierbei ist es durch spezielle Trägermaterialkombinationen möglich, ein gewünschtes Eigenschaftsprofil des Klebebandes 2 einzustellen. Durch Wahl unterschiedlicher Materialien für die Trägermaterialien 5a, 6a der beiden Bandlagen 5, 6, die im applizierten Zustand eines Klebebandes 1 jeweils die innere und äußere Seite einer Umhüllung bilden, können in einfacher Weise auch verschiedenartige Funktionen von Klebebändern miteinander kombiniert werden. Die Trägermaterialien 5a, 5b können dabei auch mehrschichtig aufgebaut sein.

Des Weiteren können auch Klebebandausführungen vorgesehen sein, die hinsichtlich der Überstände Ü1, Ü2 nicht symmetrisch ausgebildet sind, oder bei denen die erste Bandlage 5 mit der Klebeschicht 5b nur einseitig gegenüber der Seitenkante der zweiten Bandlage 6 übersteht. Auch kann bedarfsweise eine Bandlage 5, 6 aus einem breiten Streifen S und die andere Bandlage 6, 5 aus mehreren schmalen Streifen gebildet sein. Bezüglich derartiger möglicher Bandlagen-Ausführungen wird insbesondere auf die in der DE 20 2007 012 475 U1 beschriebenen Trägermaterialkombinationen verwiesen.

Für die Klebebeschichtungen 5b, 6b können insbesondere solche vorgesehen sein, bei denen der Haftklebstoff eine derartige chemische Zusammensetzung aufweist, dass sich bei Vorhandensein eines leichten Anpressdruckes auf die beiden aneinander anliegenden Klebeschichten 5b, 6b unter Auflösung ihrer Grenzflächen durch eine vollständige Koaleszenz der Klebeschichten 5b, 6b eine homogene Haftklebstoff-Masse bildet. Infrage kommen hierfür z. B. Haftklebstoffe auf der Basis von Kautschuk, Acrylaten, Silikonen oder Polyurethanen.

### Bezugszeichen

- 1: Vorrichtung zur Herstellung von 2
- 2: Klebeband
- 3: Zuführungsrolle für 5 von 1
- 4: Zuführungsrolle für 6 von 1 (Fig. 2)
- 4a, 4b: Zuführungsrollen für 6 von 1 (Fig. 1)
- 4c, 4d: Umlenkrollen für 6 von 1 (Fig. 3)
- 5: erste Bandlage von 2
- 5a: Trägermaterial von 5
- 5b: Klebebeschichtung von 5
- 6: zweite Bandlage von 2
- 6a: Trägermaterial von 6
- 6b: Klebebeschichtung von 6
- 7: Wickelrolle von 1
- 8: Schneideinrichtung von 1
- 9, 10: Wellen für 7

- A: Antriebsrichtung von 7
- B2: Breite von 2
- B3: Breite von 3
- B4: Breite von 4
- B5: Breite von 5
- B6: Breite von 6
- L: Bandlängsrichtung
- S: Streifen von 5, 6
- Ü1: erster Überstand von 2
- Ü2: zweiter Überstand von 2

## Patentansprüche

1. Verfahren zur Herstellung zumindest eines, insbesondere zur Längsummantelung von langgestrecktem Gut verwendbaren Klebebandes (2), mit zwei Bandlagen (5, 6), die jeweils aus einem Trägermaterial (5a, 6a) bestehen, das zumindest in einer der Bandlagen (5, 6) einseitig, vollflächig oder partiell, beispielsweise streifenförmig, mit einer Klebebeschichtung (5b, 6b) beschichtet ist, welches jeweils von einer Zuführungsrolle (3, 4, 4a, 4b) abgerollt wird, wobei die eine Bandlage (5, 6) mit ihrer Klebebeschichtung (5b, 6b) mit einem auf zumindest einer ihrer Längsseiten ausgebildeten seitlichen Überstand (Ü1, Ü2) gegen die andere Bandlage (6, 5) laminiert wird und das aus den laminierten Bandlagen (5, 6) gebildete Klebeband (2) auf einer Wickelrolle (7) aufgerollt wird,
**dadurch gekennzeichnet, dass** das Trägermaterial (5a, 6a) zur Bildung mindestens einer der Bandlagen (5, 6) von einer Zuführungsrolle (3, 4) abgerollt wird, die als Breitrolle ausgebildet ist, auf der das Trägermaterial (5a, 6a) eine größere Breite (B3) aufweist als seine für das Laminieren erforderliche Breite (B5, B6), und dass das Trägermaterial (5a, 6a) vor dem Laminieren in mindestens zwei in Bandlängsrichtung (L) verlaufende Streifen (S) geschnitten wird, welche die für das Laminieren erforderliche Breite (B5, B6) aufweisen, wobei die Streifen (S) vereinzelt und derart laminiert werden, dass jeder Streifen (S) in mindestens einem Klebeband (2) jeweils mindestens eine Bandlage (5, 6) bildet.

2. Verfahren nach Anspruch 1,
**dadurch gekennzeichnet, dass** die Streifen (S) gleichzeitig zu mindestens zwei Klebebändern (2) laminiert werden, welche auf jeweils separate Wickelrollen (7) aufgerollt werden.

3. Verfahren nach Anspruch 1 oder 2,
**dadurch gekennzeichnet, dass** zur Bildung beider Bandlagen (5, 6) das mit der Klebebeschichtung (5b, 6b) versehene Trägermaterial (5a, 6a) jeweils von einer Zuführungsrolle (3, 4) abgerollt wird, die als Breitrollen ausgebildet ist, und unmittelbar vor dem Laminieren in jeweils mindestens zwei Streifen (S) mit der erforderlichen Breite (B5, B6) geschnitten wird, wonach die Streifen (S) vereinzelt und derart laminiert werden, dass sie in mindestens einem Klebeband (2) jeweils die erste Bandlage (5) und die zweite Bandlage (6) bilden.

4. Verfahren nach einem der Ansprüche 1 bis 3,
**dadurch gekennzeichnet, dass** das mit der Klebebeschichtung (5b) versehene Trägermaterial (5a) zur Bildung beider Bandlagen (5, 6) von einer gemeinsamen als Breitrolle ausgebildeten Zuführungsrolle (3) abgerollt wird, in jeweils mindestens zwei, paarweise eine erste Bandlage (5) und eine zweite Bandlage (6) bildende Streifen (S) mit der erforderlichen Breite (B5, B6) geschnitten wird, wobei die Streifen (S) vereinzelt werden und die Streifen (S) zur Bildung einer der Bandlagen (6, 5) um 180E gedreht und auf die Streifen (S) zur Bildung der jeweils anderen Bandlage (5, 6) laminiert werden.

5. Verfahren nach einem der Ansprüche 1 bis 4,
**dadurch gekennzeichnet, dass** die Streifen (S) vereinzelt werden, indem sie auf separate, alterniemd auf unterschiedlichen Wellen (9, 10) angeordnete Wickelrollen (7) geführt werden, wobei die Wickelrollen (7) durch die ihnen zugeordneten Wellen (9, 10) gleichsinnig angetrieben (A) werden.

6. Verfahren nach Anspruch 5,
**dadurch gekennzeichnet, dass** auf jeder Welle (9, 10) mehrere Wickelrollen (7) angeordnet sind und die Wellen (9, 10) durch jeweils einen einzigen Antrieb mit gleicher Drehzahl angetrieben werden.

7. Verfahren nach einem der Ansprüche 1 bis 6,
**dadurch gekennzeichnet, dass** das Schneiden des mit der Klebebeschichtung (5b, 6b) versehenen Trägermaterials (5a, 6a) zu Streifen (S) im Quetschschnitt, im Scherenschnitt, im Klingenschnitt, im Berstschnitt, unter Einsatz eines Lasers oder mit einem Wasserstrahl erfolgt.

8. Verfahren nach einem der Ansprüche 1 bis 7,
**dadurch gekennzeichnet, dass** die zum Laminieren erforderliche Breite (B5, B6) und die Breite (B2) des Klebebandes (2) jeweils im Bereich von 25 mm bis 100 mm liegen, wobei die zum Laminieren erforderliche Breite (B5, B6) mindestens des Streifens (S) einer Bandlage (5, 6) jeweils kleiner ist als die Breite (B2) des Klebebandes (2).

9. Verfahren nach einem der Ansprüche 1 bis 8,
**dadurch gekennzeichnet, dass** die Breite (B3, B4) einer Breitrolle im Bereich von 500 mm bis 2000 mm liegt.

10. Vorrichtung (1), mit mindestens einer Wickelrolle (7) und mit mindestens jeweils einer drehbar gelagerten Zuführungsrolle (3, 4, 4a, 4b) für mindestens zwei Bandlagen (5, 6) zur Ausbildung eines Klebebandes (2) auf der Wickelrolle (7), insbesondere zur Durchführung eines Verfahrens nach dem Oberbegriff des Anspruchs 1, vorzugsweise nach einem der Ansprüche 1 bis 9,
**dadurch gekennzeichnet, dass** zumindest eine Zuführungsrolle (3, 4) als Breitrolle ausgebildet ist, auf der das mit der Klebebeschichtung (5b, 6b) versehene Trägermaterial (5a, 6a) eine größere Breite (B3, B4) aufweist als seine für das Laminieren erforderliche Breite (B5, B6), wobei zwischen der Breitrolle und der Wickelrolle (7) mindestens eine Schneideinrichtung (8) zum Schneiden des mit der Klebebeschichtung (5b, 6b) versehenen Trägermaterials (5a, 6a) in in Bandlängsrichtung (L) verlaufende Streifen (S) angeordnet ist.

11. Vorrichtung (1) nach Anspruch 10,
**dadurch gekennzeichnet, dass** zum Aufrollen mindestens zwei Wickelrollen (7) vorgesehen sind.

12. Vorrichtung (1) nach Anspruch 10 oder 11,
**dadurch gekennzeichnet, dass** die Zuführungsrolle(n) (3, 4, 4a, 4b) und die Wickelrolle(n) (7) achsparallel zueinander angeordnet sind.

13. Vorrichtung (1) nach Anspruch 11 oder 12,
**dadurch gekennzeichnet, dass** die Wickelrollen (7) auf mindestens einer Welle (9, 10), vorzugsweise alternierend auf mindestens zwei Wellen (9, 10) angeordnet sind.

14. Vorrichtung (1) nach einem der Ansprüche 10 bis 13,
**dadurch gekennzeichnet, dass** die Zuführungsrolle (3, 4) für jede der zu laminierenden Bandlagen (5, 6) als Breitrolle ausgebildet ist, wobei zwischen jeder Breitrolle und den Wickelrollen (7) mindestens eine Schneideinrichtung (8) angeordnet ist.

15. Vorrichtung (1) nach einem der Ansprüche 10 bis 14,
**dadurch gekennzeichnet, dass** zwischen mindestens einer Schneideinrichtung (8) und einer Wickelrolle (7) eine Umlenkeinrichtung vorgesehen ist, vorzugsweise in Form mindestens einer Umlenkrolle (4c, 4d), welche die für das Laminieren einer Bandlage (6) erforderliche Breite (B6) aufweist.

16. Vorrichtung nach einem der Ansprüche 10 bis 15,
**dadurch gekennzeichnet, dass** die Schneideinrichtung (8) eine solche ist, in der ein Kreismesser gegen eine Walze arbeitet, in eine frei geführte Bahn oder in ein Untermesser eintaucht, oder in der eine fest stehende Klinge in das durchlaufende, mit der Klebebeschichtung (5b, 6b) versehene Trägermaterial (5a, 6a) eintaucht, oder in der das Schneiden mittels eines Laser- oder eines Wasserstrahls erfolgt.

## Claims

1. A method for producing at least one adhesive tape (2) that can be used, in particular, for the longitudinal sheathing of longitudinally extended products, having two tape plies (5, 6), each of which consists of a carrier material (5a, 6a) which is at least coated completely or partially, for example in strips, with an adhesive coating (5b, 6b) on at least one side of one of the tape plies (5, 6), the carrier material (5a, 6a) being unwound from a feeding roll (3, 4, 4a, 4b), the one tape ply (5, 6) with its adhesive coating (5b, 6b) being laminated against the othertape ply (6, 5) with a lateral projection (Ü1, Ü2) configured on at least one of the longitudinal sides thereof, and the adhesive tape (2) composed of the laminated tape plies (5, 6) being wound onto a winding roll (7),
**characterized in that** the carrier material (5a, 6a) for forming at least one of the tape plies (5, 6) is unwound from a feeding roll (3, 4) which is configured as a wide roll, on which the carrier material (5a, 6a) has a greater width (B3) than its width (B5, B6) required for laminating, and that the carrier material (5a, 6a) is cut into two strips (S) extending in the longitudinal direction of the tape (L) and having the width (B5, B6) required for laminating, the strips (S) being separated and laminated such that each strip (S) forms at least one tape ply (5, 6) in at least one adhesive tape (2).

2. The method according to claim 1,
**characterized in that** the strips (S) are laminated simultaneously to form at least two adhesive tapes (2) which are each wound onto separate winding rolls (7).

3. A method according to claim 1 or 2,
**characterized in that** to form both tape plies (5, 6) the carrier material (5a, 6a) provided with the adhesive coating (5b, 6b) is respectively unwound from a feeding roll (3, 4) which is configured as a wide roll, and is respectively cut in at least two strips (S) of the required width (B5, B6) immediately before laminating, according to which the strips (S) are separated and laminated such that they each form the first tape ply (5) and the second tape ply (6) in at least one adhesive tape (2).

4. A method according to any one of claims 1 to 3,
**characterized in that** the carrier material (5a) provided with the adhesive coating (5b) to form both tape plies (5, 6) is unwound from a common feeding roll (3) configured as a wide roll, is cut into respectively at least two pairs of strips (S) forming a first tape ply (5) and a second tape ply (6) of the required width (B5, B6), the strips (S) being separated and the strips (S) for forming one of the tape plies (6, 5) being rotated 180° and laminated onto the strips (S) to form the respectively other tape ply (5, 6).

5. A method according to any one of claims 1 to 4,
**characterized in that** the strips (S) are separated by alternately guiding them on winding rolls (7) arranged on different shafts (9, 10), the winding rolls (7) being driven in the same direction (A) by their allocated shafts.

6. The method according to claim 5,
**characterized in that** several winding rolls (7) are arranged on each shaft (9, 10), and the shafts (9, 10) are each respectively driven at the same speed by one single drive.

7. A method according to any one of claims 1 to 6,
**characterized in that** the carrier material (5a, 6a) provided with the adhesive coating (5b, 6b) is cut into strips (S) by crush cutting, shear cutting, blade cutting, burst cutting, using a laser or with a water jet.

8. A method according to any one of claims 1 to 7,
**characterized in that** the width (B5, B6) required for laminatingand the width (B2) of the adhesive tape (2) are each in the range of 25 mm to 100 mm, the width (B5, B6) required for laminating at least the strip (S) of one tape ply (5, 6) being respectively smaller than the width (B2) of the adhesive tape (2).

9. A method according to any one of claims 1 to 8,
**characterized in that** the width (B3, B4) of a wide roll is in the range of 500 mm to 2000 mm.

10. An apparatus (1) having at least one winding roll (7) and having at least one rotatable feeding roll (3, 4, 4a, 4b) for at least two tape plies (5, 6) to form an adhesive tape (2) on the winding roll, in particular to implement a method according to the preamble of claim 1, preferentially according to any one of claims 1 to 9,
chacaracterized in that at least one feeding roll (3, 4) is configured as a wide roll, on which the carrier material (5a, 6b) provided with the adhesive coating (5b, 6b) has a greater width (B3, B4) than its width (B5, B6) required for laminating, at least one cutting device (8) to cut the carrier material (5a, 6b) provided with the adhesive coating (5b, 6b) into strips (S) extending in the longitudinal direction of the tape (L) being arranged between the wide roll and the winding roll (7)

11. The apparatus (1) according to claim 10,
**characterized in that** at least two winding rolls (7) are provided for winding.

12. The apparatus (1) according to claim 10 or 11,
**characterized in that** the feeding rolls (3, 4, 4a, 4b) and the winding roll(s) (7) are arranged axially parallel to one another.

13. The apparatus (1) according to claim 11 or 12,
**characterized in that** the winding rolls (2) are arranged alternately on at least one shaft (9, 10), preferentially on at least two shafts (9, 10).

14. An apparatus (1) according to any one of claims 10 to 13,
**characterized in that** the feeding roll (3, 4) for each of the tape plies (5, 6) to be laminated is configured as a wide roll, at least one cutting device (8) being arranged between each wide roll and the winding rolls (7).

15. An apparatus (1) according to any one of claims 10 to 14,
**characterized in that** a deflection device is provided between at least one cutting device (8) and a winding roll (7), preferentially in the form of at least one deflection roll (4c, 4d), which has the width (B6) required for laminating a tape ply (6).

16. An apparatus (1) according to any one of claims 10 to 13,
**characterized in that** the cutting device (8) is one in which a circular knife works against a roller, dives into a freely guided path or into a lower knife, or in which a stationary blade dives into the pass-through carrier material (5b, 6b) provided with the adhesive coating (5b, 6b), or in which cutting is carried out by means of a laser beam or a water jet.

## Revendications

1. Procédé servant à fabriquer au moins un ruban adhésif (2) pouvant être utilisé en particulier aux fins du gainage longitudinal d'articles allongés, avec deux couches de ruban (5, 6), qui sont respectivement constituées d'un matériau de support (5a, 6a), qui est appliqué en couche avec un revêtement adhésif (5b, 6b) au moins dans une des couches de ruban (5, 6) d'un seul côté, sur toute la surface ou partiellement, par exemple en forme de bande et qui est respectivement déroulé d'un rouleau de distribution (3, 4, 4a, 4b), dans lequel l'une des couches de ruban (5, 6) est laminée avec son revêtement adhésif (5b, 6b) contre l'autre couche de bande (6, 5) avec un décalage (Ü1, Ü2) latéral réalisé sur au moins l'un de ses côtés longitudinaux et dans lequel le ruban adhésif (2) formé à partir des couches de ruban (5, 6) laminées est enroulé sur un rouleau d'enroulement (7),
**caractérisé en ce que** le matériau de support (5a, 6a) servant à former au moins une des couches de ruban (5, 6) est déroulé d'un rouleau de distribution (3, 4), qui est réalisé sous la forme d'un rouleau large, sur lequel le matériau de support (5a, 6a) présente une plus grande largeur (B3) que sa largeur (B5, B6) requise pour le laminage, et **en ce que** le matériau de support (5a, 6a) est découpé, avant le laminage, en au moins deux bandes (S) s'étendant dans le sens de la longueur de ruban (L), lesquelles présentent la largeur (B5, B6) requise pour le laminage, dans lequel les bandes (S) sont séparées et laminées de telle manière que chaque bande (S) forme dans au moins un ruban adhésif (2), respectivement au moins une couche de ruban (5, 6).

2. Procédé selon la revendication 1,
**caractérisé en ce que** les bandes (S) sont laminées simultanément pour former au moins deux rubans adhésifs (2), lesquels sont enroulés sur des rouleaux d'enroulement (7) respectivement séparés.

3. Procédé selon la revendication 1 ou 2,
**caractérisé en ce que** le matériau de support (5a, 6a) pourvu du revêtement adhésif (5b, 6b) est déroulé respectivement d'un rouleau de distribution (3, 4) aux fins de la formation des deux couches de ruban (5, 6), lequel rouleau de distribution est réalisé sous la forme d'un rouleau large, et est découpé, directement avant le laminage, en respectivement au moins deux bandes (S) à la largeur requise (B5, B6), les bandes (S) étant par la suite séparées et laminées de telle manière qu'elles forment, dans au moins un ruban adhésif (2), respectivement la première couche de ruban (5) et la deuxième couche de ruban (6).

4. Procédé selon l'une quelconque des revendications 1 à 3,
**caractérisé en ce que** le matériau de support (5a) pourvu du revêtement adhésif (5b) est déroulé d'un rouleau de distribution (3) commun réalisé sous la forme d'un rouleau large aux fins de la formation des deux couches de ruban (5 ; 6), et est découpé en respectivement au moins deux bandes (S) formant par paire une première couche de ruban (5) et une deuxième couche de ruban (6) à la largeur requise (B5, B6), dans lequel les bandes (S) sont séparées et les bandes (S) sont tournées de 180° aux fins de la formation d'une des couches de ruban (6, 5) et les bandes (S) sont laminées pour former l'autre couche de ruban (5, 6) respective.

5. Procédé selon l'une quelconque des revendications 1 à 4,
**caractérisé en ce que** les bandes (S) sont séparées, **en ce qu'**elles sont guidées sur des rouleaux d'enroulement (7) séparés disposés en alternance sur divers arbres (9, 10), les rouleaux d'enroulement (7) étant entraînés (A) dans le même sens par les arbres (9, 10) qui leur sont associés.

6. Procédé selon la revendication 5,
**caractérisé en ce que** plusieurs rouleaux d'enroulement (7) sont disposés sur chaque arbre (9, 10), et **en ce que** les arbres (9, 10) sont entraînés par respectivement un seul mécanisme d'entraînement à la même vitesse de rotation.

7. Procédé selon l'une quelconque des revendications 1 à 6,
**caractérisé en ce que** le découpage pour obtenir des bandes (S) du matériau de support (5a, 6a) pourvu du revêtement adhésif (5b, 6b) est effectué par écrasement, par une découpe aux ciseaux, par une découpe par lames, par une découpe par éclatement, au moyen d'un faisceau laser ou d'un jet d'eau.

8. Procédé selon l'une quelconque des revendications 1 à 7,
**caractérisé en ce que** la largeur (B5, B6) requise pour le laminage et la largeur (B2) du ruban adhésif (2) sont situées respectivement dans la plage allant de 25 mm à 100 mm, la largeur (B5, B6) requise pour le laminage au moins de la bande (S) d'une couche de ruban (5, 6) étant respectivement plus petite que la largeur (B2) du ruban adhésif (2).

9. Procédé selon l'une quelconque des revendications 1 à 8,
**caractérisé en ce que** la largeur (B3, B4) d'un rouleau large est située dans la plage allant de 500 mm à 2000 mm.

10. Dispositif (1), comprenant au moins un rouleau d'enroulement (7) et au moins respectivement un rouleau de distribution (3, 4, 4a, 4b) logé de manière à pouvoir tourner pour au moins deux couches de ruban (5, 6) aux fins de la réalisation d'un ruban adhésif (2) sur le rouleau d'enroulement (7), en particulier aux fins de la mise en oeuvre d'un procédé selon le préambule de la revendication 1, de préférence selon l'une quelconque des revendications 1 à 9,
**caractérisé en ce qu'**au moins un rouleau de distribution (3, 4) est réalisé sous la forme d'un rouleau large, sur lequel le matériau de support (5a, 6a) pourvu du revêtement adhésif (5b, 6b) présente une largeur (B3, B4) plus grande que sa largeur (B5, B6) requise pour le laminage, dans lequel au moins un système de découpage (8) servant à découper le matériau de support (5a, 6a) pourvu du revêtement adhésif (5b, 6b) en bandes (S) s'étendant dans le sens de la longueur du ruban (L) est disposé entre le rouleau large et le rouleau d'enroulement (7).

11. Dispositif (1) selon la revendication 10,
**caractérisé en ce qu'**au moins deux rouleaux d'enroulement (7) sont prévus pour l'enroulement.

12. Dispositif (1) selon la revendication 10 ou 11,
**caractérisé en ce que** le/les rouleau(x) de distribution (3, 4, 4a, 4b) et le/les rouleau(x) d'enroulement (7) sont disposés l'un par rapport à l'autre de manière parallèle axialement.

13. Dispositif (1) selon la revendication 11 ou 12,
**caractérisé en ce que** les rouleaux d'enroulement (7) sont disposés sur au moins un arbre (9, 10), de préférence en alternance sur au moins deux arbres (9, 10).

14. Dispositif (1) selon l'une quelconque des revendications 10 à 13,
**caractérisé en ce que** le rouleau de distribution (3, 4) pour chacune des couches de ruban (5, 6) devant être laminées est réalisé sous la forme d'un rouleau large, dans lequel au moins un système de découpage (8) est disposé entre chaque rouleau large et les rouleaux d'enroulement (7).

15. Dispositif (1) selon l'une quelconque des revendications 10 à 14,
**caractérisé en ce qu'**un système de renvoi est prévu entre au moins un système de découpage (8) et un rouleau d'enroulement (7), de préférence sous la forme au moins d'un rouleau de renvoi (4c, 4d), qui présente la largeur (B6) requise pour le laminage d'une couche de ruban (6).

16. Dispositif selon l'une quelconque des revendications 10 à 15,
**caractérisé en ce que** le système de découpage (8) est un système dans lequel une lame circulaire fonctionne contre un cylindre, s'enfonce dans une piste guidée librement ou dans une lame inférieure, ou dans lequel une lame immobile s'enfonce dans le matériau de support (5a, 6a) continu pourvu du revêtement adhésif (5b, 6b), ou dans lequel le découpage est effectué au moyen d'un faisceau laser ou d'un jet d'eau.
